Europäisches Patentamt

**European Patent Office**

**Office européen des brevets**

(11) Veröffentlichungsnummer: **0 029 159**
A1

(12) **EUROPÄISCHE PATENTANMELDUNG**

(21) Anmeldenummer: **80106762.0**

(22) Anmeldetag: **04.11.80**

(51) Int. Cl.³: **F 24 C 7/08,** G 05 B 1/01

(30) Priorität: **13.11.79 DE 2945681**

(43) Veröffentlichungstag der Anmeldung: **27.05.81**
**Patentblatt 81/21**

(84) Benannte Vertragsstaaten: **FR GB NL**

(71) Anmelder: **NEFF-WERKE Carl Neff GmbH,**
**Bahnhof-Strasse 9-11, D-7518 Bretten (DE)**

(72) Erfinder: **Schembera, Friedrich, Freiheitsstrasse 37,**
**D-7519 Walzbachtal (DE)**

(74) Vertreter: **Vogl, Leo, Dipl.-Ing., AEG-TELEFUNKEN**
**Konsumgüter AG Abteilung Patente Muggenhofer**
**Strasse 135, D-8500 Nürnberg (DE)**

(54) **Elektrisch beheizter Haushaltsbackofen.**

(57) Bei einem elektrisch beheizten Haushaltsbackofen mit einem manuell einstellbaren Thermostaten (1, 2) für die Backofentemperatur, einem Leistungsschalter (7) zum Schalten der Backofenbeheizung sowie mit einer Zeitschalteinrichtung (4, 5) zum Steuern der Beheizungsdauer ist eine die eingewählte Backofentemperatur reproduzierbar festhaltende Leuchtdioden-Anordnung (13/14) sowie eine die eingewählte Backzeit- bzw. Backdauer reproduzierbar festhaltende Leuchtdioden-Anordnung (8) vorgesehen, die beide über einen Anzeige-Abruf-Schalter (15) zum Zwecke des Abrufens aktivierbar sind.

NEFF - Werke
Carl Neff GmbH
D-7518 Bretten


## Elektrisch beheizter Haushaltsbackofen

Die Erfindung betrifft einen elektrisch beheizten Haushaltsbackofen mit einem manuell einstellbaren Thermostaten für die Backofentemperatur, einem Leistungsschalter zum Schalten der Backofenbeheizung sowie mit einer Zeitschalteinrichtung zum Steuern der Beheizungsdauer.

Haushaltsbacköfen der vorgenannten Art sind allgemein bekannt. Das Backen und Braten in solchen Haushaltsbacköfen erfolgt in der Regel nach den in der zugehörigen Bedienungsanleitung bzw. in dem entsprechenden Kochbuch angegebenen Temperaturwerten und Zeitangaben. Diese Angaben stellen aber nur ungefähre Richtungswerte für die Hausfrau dar. Der für ein optimales Gelingen eines bestimmten Back- oder Bratvorganges notwendige echte Temperaturwert und die genaue Zeitdauer sind von der Hausfrau im Laufe der Zeit durch eigene Versuche zu ermitteln und damit festzulegen. Werden solche ermittelten Daten aber nicht sofort nach Beendigung des betreffenden Back- oder Bratvorganges festgehalten, so geraten diese schnell in Vergessenheit, da z.B. nach Zurückstellen des Back- und Bratofen-Thermostaten der ursprünglich mit dem Einstellknebel vorgewählte Temperaturwert gelöscht ist.

0029159

- 2 -

Hier will die Erfindung Abhilfe schaffen. Die Erfindung, wie sie in den Ansprüchen gekennzeichnet ist, löst die Aufgabe, den Haushaltsbackofen der eingangs genannten Art so zu verbessern, daß ein einmal eingestellter und optimal gelungener Back- oder Bratvorgang für irgend ein beliebiges Rezept nach Beendigung dieses Vorganges in seinen ursprünglich eingestellten Temperatur- und Zeitwerten reproduzierbar festgehalten und auf Abruf signalisierbar ist.

Mit der Erfindung wird in vorteilhafter Weise erreicht, daß durch Betätigen eines Anzeige-Abruf-Schalters die angewählten Leuchtdioden aufleuchten und der eingewählte Code für den eingestellten Temperatur- und Zeitwert abgelesen und notiert werden kann. Die Leucht- bzw. Signaldioden bleiben dabei so lange aktiv, bis durch erneutes Betätigen des Anzeige-Abruf-Schalters die Anzeige endgültig gelöscht wird. Durch die vorgeschlagene alphanumerische Signalisierung sind eine Vielzahl von Temperatur- und Zeitkombinationen möglich, so daß praktisch sämtliche in der Praxis vorkommenden Rezept-Daten zeit- und temperaturmäßig eingeordnet werden können.

Ein Ausführungsbeispiel der Erfindung ist in der Zeichnung dargestellt und wird an Hand dieser nachfolgend näher beschrieben. Es zeigen

Figur 1 den schematischen Aufbau einer Signalisierungseinrichtung für einen Haushaltsbackofen als Blockschaltbild,

Figur 2 die Leuchtanzeige der Signalisierungseinrichtung in Einzeldarstellung,

Figur 3 den Anzeigeplan der für die Backofentemperatur zuständigen Leuchtdioden und

Figur 4 den Anzeigeplan der für die Backdauer zuständigen Leuchtdioden.

- 3 -

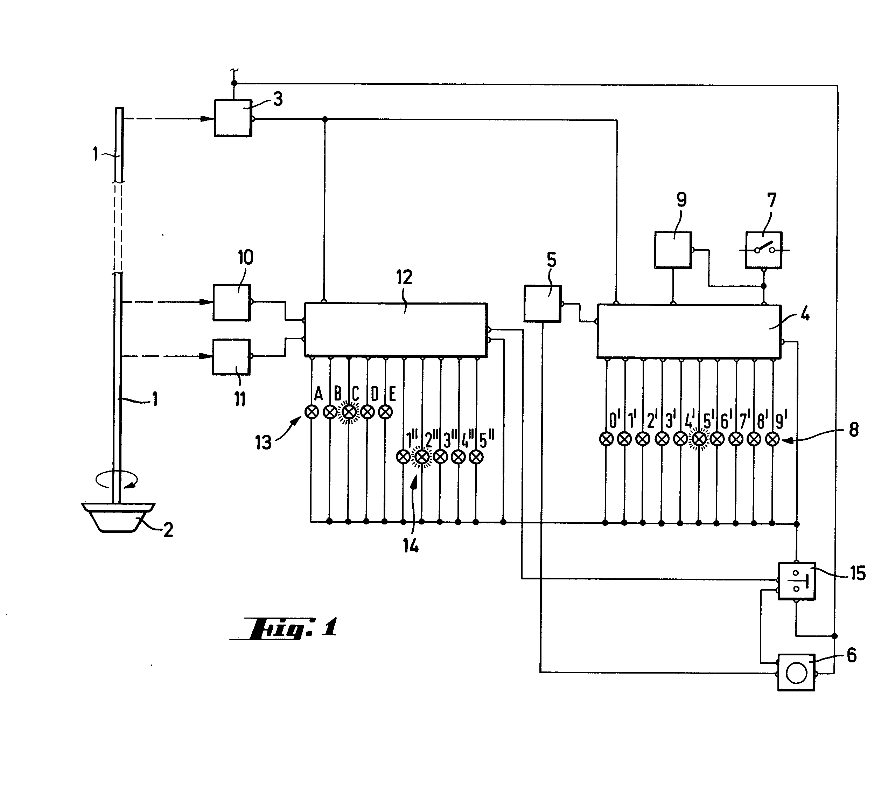

Die im Blockschaltbild nach Figur 1 dargestellten Schalt- und Anzeigemittel dienen zur zeitabhängigen Leistungssteuerung und reproduzierbarer Anzeige der Backofentemperatur- und Backdauereinstellung eines in der Zeichnung nicht wiedergegebenen, vorzugsweise elektrisch beheizten Haushaltsbackofens, bei dem in einer sogen. Backofenmuffel das zu behandelnde Back- oder Bratgut gebacken bzw. gegart wird. Zur Einstellung der von einem Thermostaten geregelten Temperatur in der Backofenmuffel dient in üblicher Weise ein auf der Thermostat-Achse 1 aufgesteckter drehbarer Einstellknebel 2, der in bekannter Weise mit Temperatur-Markierungen von 50 bis 300°C versehen ist. Mit dem Einstellen des Backofenmuffel-Thermostaten wird ein Netzschalter 3 aktiviert, so daß die nachfolgend genannten Schalt- und Anzeigeelemente mit Spannung versorgt werden können. Gleichzeitig mit dem Einschalten bzw. Schließen des Netzschalters 3 erhält ein Zeitschaltkreis 4 mit einem in Reihe dazu liegenden Zeittaktgeber 5 von maximal 120 Min. Durchlaufzeit Spannung und beginnt abzulaufen. Der Zeittaktgeber 5 ist über eine auf ihn einwirkende manuell betätigbare Zeitvorgabe-Einrichtung 6 einstellbar. Der Zeitschaltkreis 4 ist so ausgelegt, daß nach Ablauf einer bestimmten vorgewählten Zeitdauer oder am Ende der 120 Min. Laufzeit über einen zugeschalteten Backofen-Leistungsschalter 7 die Beheizung für die Backofenmuffel abgeschaltet wird. Mit Abschalten der Backofenmuffel-Beheizung wird eine eine bestimmte Backzeitdauer anzeigende grüne Signaldiode einer Leuchtdioden-Anordnung 8 über einen in Reihe zum Leistungsschalter 7 liegenden Blink-Generator 9 im Sekundenrythmus zum Blinken gebracht. Zur Leuchtdioden-Anordnung 8 des Zeitschaltkreises 4 gehören zehn von 0' bis 9' codierte, grüne Leuchtdioden, welche für die Dauer der verschiedenen Backzeitenbereiche stehen. Die einzelnen grünen Leuchtdioden der Leuchtdioden-Anordnung 8 stehen dabei für folgende Backdauer:

Leuchtdiode 0' für eine Backdauer von etwa 30 Min.

"        1'              "               40 Min.

"        2'              "               50 Min.

"        3'              "               60 Min.

"        4'              "               70 Min.

"        5'              "               80 Min.

"        6'              "               90 Min.

"        7'              "              100 Min.

"        8'              "              110 Min.

"        9'              "              120 Min.

Weiterhin werden durch die Thermostat-Achse 1 zwei Impulsgeber 10 und 11 betätigt, die in Reihe zu einer Backofen-Temperatur-Anzeige 12 gehören, die aus einer roten Leuchtdioden-Anordnung 13 und einer gelben Leuchtdioden-Anordnung 14 besteht. Zur Leuchtdioden-Anordnung 13 gehören fünf rote Leuchtdioden mit einem Alphacode A,B,C,D,E und zur Leuchtdioden-Anordnung 14 gehören fünf gelbe Leuchtdioden mit einer numerischen Codierung von 1" bis 5".

Die fünf roten Leuchtdioden der Anordnung 13 stehen dabei für folgende Backofen-Temperaturbereiche:

Leuchtdiode A für einen T-Bereich von etwa 50 bis 100°C

"        B              "    "          101 bis 150°C

"        C              "    "          151 bis 200°C

"        D              "    "          201 bis 250°C

"        E              "    "          251 bis 300°C

Die fünf gelben Leuchtdioden der Anordnung 14 stehen für folgende feineinstellbare Temperaturbereiche:

Leuchtdiode 1" für einen T-Bereich von etwa 1 bis 10°C

"        2"              "    "          11 bis 20°C

"        3"              "    "          21 bis 30°C

"        4"              "    "          31 bis 40°C

"        5"              "    "          41 bis 50°C

- 5 -

Mit dem Schaltkreis 4 und dem Anzeigekreis 12 für die drei Leuchtdioden-Anordnungen 8,13,14 ist noch ein manuell betätigbarer Anzeige-Abruf-Schalter 15 in Reihe geschaltet, durch dessen Betätigung einerseits eine Aktivierung der angewählten Leuchtdioden möglich ist und andererseits durch erneutes Betätigen die aktivierte Signalisierung der angewählten Leuchtdioden endgültig gelöscht werden kann.

Die vorbeschriebene Abruf-Signalisierungs-Einrichtung arbeitet nun folgendermaßen:

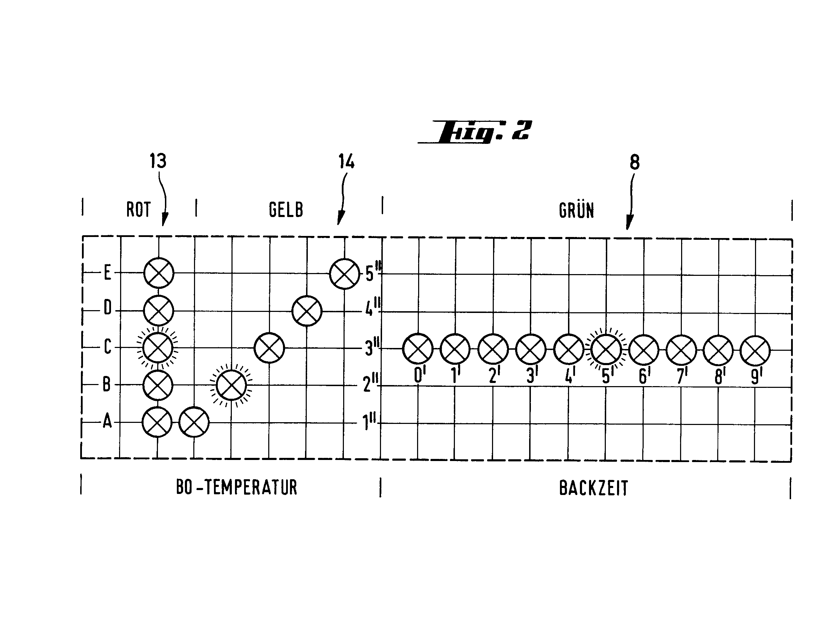

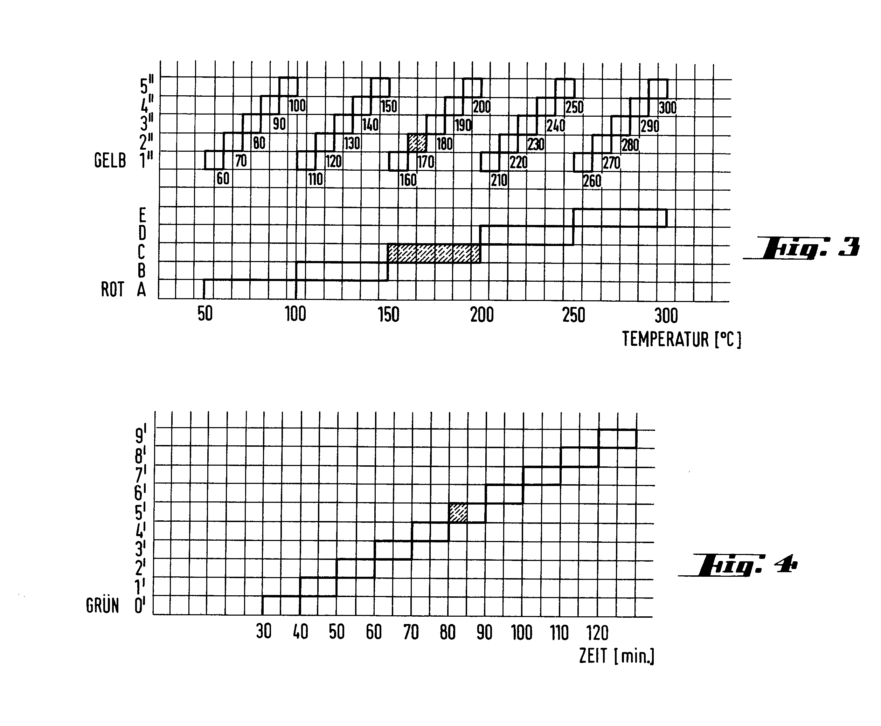

Durch entsprechende Schaltmittel werden die für die Anzeige der gewählten bzw. eingestellten Backofenmuffel-Temperatur (BO-Temperatur, Figur 2) zuständigen fünf roten und fünf gelben Leuchtdioden der Anordnungen 13 bzw. 14 so geschaltet, daß beim Einstellen einer bestimmten Back- oder Brattemperatur mittels des mit Temperatur-Markierungen versehenen Thermostat-Einstellknebels 2 mit zunehmenden Drehwinkel, mit dem bekanntlich auch die Höhe der einzustellenden Temperatur entsprechend zunimmt, zunächst der Impulsgeber 10 für die erste rote Leuchtdiode A für die niedrigste Temperatur von ca. 50°C erregt wird. Der Impuls bleibt so lange stehen, bis durch Weiterdrehen des Einstellknebels 2 die fünf Impulse des zweiten Impulsgebers 11 für die erste gelbe Leuchtdiode 1" und mit Weiterdrehen danach für die weiteren Leuchtdioden 2",3",4",5" abgelaufen sind. Danach ist wieder der Impulsgeber 10 wirksam und es erfolgt der Wechsel zur zweiten roten Leuchtdiode B für eine Temperatur von ca. 101°C. Mit Weiterdrehen des Einstellknebels 2 laufen dann wieder die fünf Impulse des zweiten Impulsgebers 11 für die erste bis fünfte gelbe Leuchtdiode durch, bis der nächste Wechsel auf die dritte rote Leuchtdiode C für einen Temperaturbereich von ca. 151°C erfolgt. Dieses Spiel setzt sich fort, bis die höchst mögliche Temperatur, die beim beschriebenen Ausführungsbeispiel bei ca. 300°C liegt, erreicht ist. Der Bereich der wählbaren Backofenmuffel-Temperaturen ist damit in die nachstehend aufgeführten

fünfundzwanzig Schritte unterteilt:

| A1" | A2" | A3" | A4" | A5" |
|-----|-----|-----|-----|-----|
| B1" | B2" | B3" | B4" | B5" |
| C1" | C2" | C3" | C4" | C5" |
| D1" | D2" | D3" | D4" | D5" |
| E1" | E2" | E3" | E4" | E5" |

Dabei entsprechen die eingestellten Sprünge den am häufigsten vorkommenden Temperaturen, d.h. sie müssen nicht linear über den Drehwinkel-Bereich des Einstellknebels 2 bzw. der Thermostat-Achse 1 verteilt sein. Das Gleiche gilt für die zehn grünen Leuchtdioden, welche die Backzeit anzeigen. Für die niedrigste Backzeit von ca. 30 Min. ist die Leuchtdiode 0' vorgesehen, während die längste Backzeit von ca. 120 Min. der Leuchtdiode 9' zugeordnet ist. Auch hier ist der übrige Zeitverlauf den Hauptbackzeiten entsprechend nicht linear eingeteilt.

Im Nachfolgenden wird der Ablauf einer Einstellung der Abruf-Signalisierungs-Einrichtung für ein bestimmtes Backrezept dargestellt:

Es wird angenommen, daß hier das Backgut eine Temperatur von ca. 166°C benötigt. Durch entsprechendes Drehen der Thermostat-Achse 1 mit Hilfe des mit Temperatur-Markierungen versehenen Einstellknebels 2 wird die Backtemperatur bzw. BO-Temperatur von 166°C eingestellt. Gleichzeitig mit dem Verdrehen der Thermostat-Achse 1 werden über die Impulsgeber 10 und 11 die Anzeigenschaltkreise 4 und 12 angesprochen. Die Leuchtdioden-Anzeigen 8,13,14 jedoch noch nicht aktiviert. Angenommen, es wird festgestellt, u. U. nach mehreren Korrekturen, daß eine Backzeit von 80 Min. einen optimalen Wert für die zu garende Rezeptur darstellt. In diesem Falle werden vor Zurückdrehen des Thermostat-Einstellknebels 2 auf Null, mittels des Anzeige-Abruf-Schalters 15 die Anzeigen-Leuchtdioden 8,13,14 aktiviert. Gleichzeitig erfolgt über den vorgenannten Schalter 15 das Anlegen der gesamten Anordnung an die Netzspannung, d.h. daß die Signalisierung auch dann erhalten bleibt, wenn der Thermostat-Einstellknebel 2 wieder auf Null gedreht wird. Dies erscheint deshalb wichtig, weil u.U. die Qualität eines Backvorganges erst nach einem längeren Zeitraum, z.B. nach dem Abkühlen beurteilt werden kann. Der minimale Stromverbrauch für die Signaldiode ermöglicht eine beliebig lange Einschaltzeit.

Ist im gegebenen Falle der Backvorgang zur Zufriedenheit verlaufen, wird der durch drei Leuchtdioden C2", 5' dargestellte alphanumerische Code zu dem Backrezept festgehalten. Danach kann durch erneutes Drehen des Abruf-Schalters 15 der Code gelöscht und die gesamten Anzeigenregister von Neuem benutzt werden.

Im Wiederholungsfall, d.h. beim Backen der gleichen Rezeptur wird umgekehrt verfahren, d.h. der Abruf-Schalter 15 wird betätigt und wahlweise zuerst die BO-Temperatur oder die Zeit eingegeben. Die Zeiteingabe erfolgt durch Betätigen der Zeitvorgabe-Einrichtung 6 so lange, bis die entsprechende Leuchtdiode 5' aufleuchtet. Die Temperatureingabe erfolgt durch Drehen der Thermostat-Achse 1 ebenfalls so lange, bis die beiden Temperatur-Anzeigendioden C2" in der richtigen Anordnung aufleuchten. Für diesen Fall besitzt die Temperatureinstell-Markierung des Thermostat-Knebels 2 keine Bedeutung. Mit dem Fortschreiten des Garprozesses schalten nacheinander die Leuchtdioden ein bis mit dem Erreichen der angewählten Leuchtdiode der Garvorgang abgebrochen wird und dies durch ein Blinken der Leuchtdiode 5 optisch angezeigt wird. Parallel zur optischen Anzeige ist auch eine akustische Signalisierung mit bekannten Mitteln vorstellbar.

- 8 -

Patentansprüche:

1. Elektrisch beheizter Haushaltsbackofen mit einem manuell einstellbaren Thermostaten (1,2) für die Backofentemperatur, einem Leistungsschalter (7) zum Schalten der Backofenbeheizung sowie mit einer Zeitschalteinrichtung (4,5) zum Steuern der Beheizungsdauer, gekennzeichnet durch eine die eingewählte Backofentemperatur reproduzierbar festhaltende Leuchtdioden-Anordnung (13,14) sowie eine die eingewählte Backzeit- bzw. Backdauer reproduzierbar festhaltende Leuchtdioden-Anordnung (8), wobei die Leuchtdioden-Anordnungen (8,13,14) über einen Anzeige-Abruf-Schalter (15) aktivierbar sind.

2. Haushaltsbackofen nach Anspruch 1, dadurch gekennzeichnet, daß die Leuchtdioden-Anordnung (13) aus fünf Leuchtdioden mit einem Alphacode und die Leuchtdioden-Anordnung (14) aus fünf und die Leuchtdioden-Anordnung (8) aus zehn numerisch codierten Leuchtdioden(0'-9') gebildet ist.

3. Haushaltsbackofen nach Anspruch 1, dadurch gekennzeichnet, daß die beiden Leuchtdioden-Anordnungen (13,14) Teil eines Schaltkreises (12) sind, dem ein Impulsgeber (10) für die alphacodierten Leuchtdioden (A bis B) und ein Impulsgeber (11) für die numerischcodierten Leuchtdioden (1" bis 5") vorgeschaltet ist.

4. Haushaltsbackofen nach Anspruch 3, dadurch gekennzeichnet, daß die beiden Impulsgeber (10,11) über den Thermostat-Einsteller (1,2) beeinflußbar sind.

5. Haushaltsbackofen nach Anspruch 1, dadurch gekennzeichnet, daß die Leuchtdioden-Anordnung (8) Teil eines Schaltkreises (4) ist, dem ein Zeittaktgeber (5) vorgeschaltet ist, der wiederum in Reihe mit einer manuell bedienbaren Zeitvorgabe-Einrichtung (6) geschaltet ist.

6. Haushaltsbackofen nach Anspruch 1, dadurch gekennzeichnet, daß der Anzeige-Abruf-Schalter (15) in Reihe mit je einem Schaltkreis (4,12) der Leuchtdioden-Anordnungen (8,13,14) gelegt ist.

7. Haushaltsbackofen nach Anspruch 5 oder 6, dadurch gekennzeichnet, daß am Schaltkreis (4) für die Leuchtdioden-Anordnung (8) der Leistungsschalter (7) angeschlossen ist und ein Blink-Generator (9) einerseits am Schaltkreis (4) und andererseits am Stromkreis zum Leistungsschalter (7) gelegt ist.

*Fig. 1*

**Fig. 2**

*Fig. 3*

*Fig. 4*

GELB — 5" 4" 3" 2" 1"

100  90  80  70  60  150  140  130  120  110  200  190  180  170  160  250  240  230  220  210  300  290  280  270  260

E D C B ROT A

50  100  150  200  250  300

TEMPERATUR [°C]

GRÜN — 9' 8' 7' 6' 5' 4' 3' 2' 1' 0'

30  40  50  60  70  80  90  100  110  120

ZEIT [min.]

0029159

0029159

Europäisches Patentamt

**EUROPÄISCHER RECHERCHENBERICHT**

Nummer der Anmeldung

EP 30 10 0762

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 2 001 467 (DIEHL) <br><br> * Seite 2, Zeile 16 bis Seite 3, Zeile 82; Abbildungen 2,3 * | 1,3 |
| | DE - A - 2 734 470 (EGO REGELTECH-NIK) <br><br> * Seite 7, Zeile 3 bis Seite 8, Zeile 6; Seite 10, Zeilen 2 bis 14; Abbildungen 1,2 * | 1,2 |
| | US - A - 3 819 906 (R. GOULD) <br><br> * Spalte 1, Zeilen 1 bis 25; Spalte 2, Zeile 37 bis Spalte 6, Zeile 44; Abbildungen 3-6 * | 1 |
| | US - A - 4 159 648 (H. PROSKY) <br><br> * Spalte 2, Zeile 46 bis Spalte 3, Zeile 5; Abbildungen 1,2 * | 1 |
| | DE - A - 2 625 952 (W. JOENS) <br><br> * Seite 8, Zeile 7 bis Seite 9, Zeile 23; Abbildungen 1,2 * | 1 |
| | GB - A - 2 022 264 (GENERAL ELEC-TRIC) <br><br> * Seite 3, Zeile 14 bis Seite 4, Zeile 41; Abbildungen 2-4 * | 1 |
| | | ./. |

**KLASSIFIKATION DER ANMELDUNG (Int. Cl.³)**

F 24 C 7/08
G 05 B 1/01

**RECHERCHIERTE SACHGEBIETE (Int. Cl.³)**

F 24 C 7/08
G 05 B 1/01
G 05 B 1/03
G 01 K 1/02
G 01 K 1/04
G 05 D 23/19
G 05 D 23/20
G 05 D 23/275

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 03-03-1981 | V. HELOT |

EPA form 1503.1 06.78

0029159

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | DE - A - 2 636 044 (C. KÄFERLEIN)<br><br>* Seite 4, Zeilen 12 bis 25; Abbildungen 1-3 * | 1 | |
| | | | **RECHERCHIERTE SACHGEBIETE (Int. Cl.³)** |